Europäisches Patentamt

European Patent Office

Office européen des brevets

(11) Veröffentlichungsnummer: **0 146 082**
**A2**

## (12) EUROPÄISCHE PATENTANMELDUNG

(21) Anmeldenummer: **84114837.2**

(51) Int. Cl.⁴: **B 01 D 53/04**

(22) Anmeldetag: **06.12.84**

(30) Priorität: **15.12.83 DE 3345438**

(43) Veröffentlichungstag der Anmeldung: **26.06.85**
**Patentblatt 85/26**

(84) Benannte Vertragsstaaten: **AT DE FR GB IT NL SE**

(71) Anmelder: **Linde Aktiengesellschaft,
Abraham-Lincoln-Strasse 21, D-6200 Wiesbaden (DE)**

(72) Erfinder: **von Gemmingen, Ulrich, Dr. rer. nat.,
Sturystrasse 4, D-8000 München 40 (DE)**

(74) Vertreter: **Schaefer, Gerhard, Dr., Linde
Aktiengesellschaft Zentrale Patentabteilung,
D-8023 Höllriegelskreuth (DE)**

(54) **Verfahren zur adsorptiven Abtrennung von Wasserdampf und Kohlendioxid aus einem Gasstrom.**

(57) Bei einem Verfahren zur adsorptiven Abtrennung von Wasserdampf und schwächer adsorbierbaren Komponenten aus einem Gasstrom, bei dem nach Beendigung einer Adsorptionsphase ein heißes Spülgas zur Regenerierung durch den Adsorber geführt wird, wird vorgeschlagen, daß der Adsorber aus zwei hintereinander geschalteten Adsorptionsbetten besteht, wobei im ersten Adsorptionsbett im wesentlichen der gesamte Wasserdampf und im zweiten Adsorptionsbett im wesentlichen nur noch schwächer adsorbierbare Komponenten adsorbiert werden, und daß den Austrittsenden der beiden Adsorptionsbetten während mindestens eines Teils der Heißspülphase Spülgas direkt zugeführt wird.

EP 0 146 082 A2

## Verfahren zur adsorptiven Abtrennung von Wasserdampf und Kohlendioxid aus einem Gasstrom

Die Erfindung betrifft ein Verfahren zur adsorptiven Abtrennung von Wasserdampf und mindestens einer weiteren, weniger stark adsorbierbaren Komponente aus einem Gasstrom, bei dem der Gasstrom während einer Adsorptionsphase dem Eintrittsende eines Adsorbers zugeführt und nach Durchströmen eines Adsorptionsbettes vom Austrittsende des Adsorbers der an Wasserdampf und der weiteren Komponente verarmte Gasstrom abgezogen wird, wobei nach Beendigung einer Adsorptionsphase während einer Heißspülphase ein über das Austrittsende des Adsorbers zugeführtes Spülgas bei erhöhter Temperatur durch den Adsorber geführt und mit desorbierten Komponenten beladenes Spülgas vom Eintrittsende des Adsorbers abgezogen wird.

Bei einem bekannten Verfahren dieser Art, das in der DE-AS 20 64 137 beschrieben ist und bei dem es als wesentlich angesehen wird, daß zeolithisches Molekularsieb als Adsorptionsmittel zur Adsorption von Wasserdampf und Kohlendioxid eingesetzt wird, soll der Energieaufwand für die Regenerierung des beladenen Adsorptionsmittels dadurch verringert werden, daß die Temperatur des heißen Spülgases statt der üblichen 200 bis 300 °C weniger als 200 °C betragen soll, und es werden Spülgastemperaturen bis herunter zu 80 °C angegeben. In der Praxis hat sich jedoch gezeigt, daß die der DE-AS 20 64 137 zugrundeliegenden Berechnungen zu optimistisch waren, denn das als Adsorptionsmittel vorgesehene Molekularsieb ließ sich bei Spülgastemperaturen unter 150 °C nicht mehr zufriedenstellend desorbieren. Moderne Anlagen zur Abtrennung von Wasserdampf und Kohlendioxid aus Gasströmen arbeiten deshalb mit einer Spülgastemperatur von etwa 170 °C. Beispiele für solche Verfahren sind unter anderem die Vorbehandlung von Gasströmen, die einem Tieftemperaturverfahren unterzogen werden sollen, um die Gefahr störender Feststoffabscheidungen zu unterbinden, beispielsweise bei der kryogenen Luftzerlegung, der Verarbeitung von Erdgas, Synthesegasen oder Spaltgasen.

Der vorliegenden Erfindung lag die Aufgabe zugrunde, ein Verfahren der eingangs genannten Art so auszugestalten, daß die thermische Regenerierung eines mit Wasser und mindestens einer weiteren, weniger stark als Wasserdampf adsorbierbaren Komponente beladenen Adsorbers mit geringerem Energieaufwand als bisher möglich ist.

Diese Aufgabe wird dadurch gelöst, daß der Gasstrom während einer Adsorptionsphase zwei hintereinander geschaltete Adsorptionsbetten durchströmt, wobei im ersten Adsorptionsbett im wesentlichen der gesamte Wasserdampf und im zweiten Adsorptionsbett im wesentlichen nur noch die weitere Komponente adsorbiert wird, und daß den Austrittsenden der beiden Adsorptionsbetten während mindestens eines Teils der Heißspülphase das Spülgas direkt zugeführt wird.

-.-

Der Erfindung liegt die Erkenntnis zugrunde, daß das Spülgas bei den üblichen Verfahren unter Verwendung eines einzigen Adsorptionsbettes, das während einer Heißspülphase im Gegenstrom zur Adsorptionsrichtung durchströmt wird, schon im Austrittsbereich des Adsorbers, d.h. vor Erreichen der mit Wasser beladenen Zone, einen Großteil seiner Wärme zur Desorption der schwächer adsorbierten Komponente und insbesondere zur Aufheizung des Adsorptionsmittels abgibt, wodurch das hohe Temperaturniveau des Spülgases gar nicht für die Desorption des Wassers, also der am stärksten an das Adsorptionsmittel gebundenen Komponente, zur Verfügung steht. Die bisher erforderliche hohe Spülgastemperatur mußte also eingehalten werden, um die für die Wasserdesorption wirklich nötige, aber beträchtlich unter der Spülgastemperatur liegende Temperatur auch noch am Ort der Wasserbeladung bereitzustellen.

Der Kern der Erfindung besteht nun darin, daß das auf eine geeignete Temperatur erhitzte Spülgas zur Wasserdesorption direkt der mit Wasser beladenen Zone zugeführt wird, daß das Spülgas sich also nicht vorher beim Durchströmen einer anderen Zone abkühlen kann. Der bei einem solchen Durchströmen üblicherweise auftretende Verlust an Heizenergie kann somit eingespart werden und trägt direkt zur Verminderung des Energiebedarfs für das Adsorptionsverfahren bei.

Ein Teil des Spülgases wird zur Desorption durch das zweite, im wesentlichen mit der weiteren Komponente beladene Adsorptionsbett geführt. Dies kann parallel zum Einleiten des Spülgases in das erste Adsorptionsbett oder zeitlich nacheinander erfolgen, wobei die Spülgase für beide Ad- sorptionsbetten gegebenenfalls auch verschiedene Tempera- turen aufweisen können.

-.-

In einer Weiterbildung des erfindungsgemäßen Verfahrens ist vorgesehen, daß das erste Adsorptionsbett in zwei Schichten aufgeteilt wird, wobei die erste Schicht so groß gewählt wird, daß sich darin im beladenen Zustand des Adsorbers die mit Wasser gesättigte Zone befindet, während dann in der zweiten Schicht die Massenübergangszone für Wasserdampf und die Koadsorptionszone für die weitere Komponente liegt. Eine solche Aufteilung des ersten Adsorptionsbettes ist insbesondere bei Verwendung unterschiedlicher Adsorptionsmittel in beiden Schichten vorteilhaft. Dann kann in der ersten, dem Adsorbereintrittsende zugewandten Schicht ein Adsorptionsmittel mit einer hohen Beladekapazität für Wasser bei einem relativ hohen Wasserdampfanteil des zu reinigenden Gases eingesetzt werden, ohne daß dieses Adsorptionsmittel eine besondere Eignung für die Erreichung sehr niedriger Wasserdampfgehalte im gereinigten Gas aufweisen muß. Die Adsorption des restlichen Wasserdampfanteils bei niedrigem Partialdruck kann dann in der ersten Schicht des ersten Adsorptionsbettes an einem speziell für solche Trennaufgaben geeigneten Adsorptionsmittel vorgenommen werden. Als Adsorptionsmittel für die erste Schicht eignen sich beispielsweise Alugel oder Silikagel, während für die zweite Schicht zeolithische Molekularsiebe, beispielsweise Zeolith 4A, 5A, 10X oder vorzugsweise 13X geeignet sind.

Die Aufteilung des ersten Adsorptionsbettes in zwei Schichten ist aber nicht nur bei Verwendung verschiedener Adsorptionsmittel in den beiden Schichten vorteilhaft, da sich durch die Aufteilung auch verfahrenstechnische Vorteile ergeben können. So ist es beispielsweise bei einer Anordnung mit getrennten Behältern für die beiden Adsorptionsbetten in manchen Fällen günstig, das aus dem zweiten Adsorptionsbett austretende, mit der weiteren Komponente beladene wasserfreie Spülgas noch während mindestens eines Teils der Spülphase durch die erste Schicht des ersten Adsorptionsbettes zu leiten.

Da die Regenerierung eines mit Wasser beladenen Adsorptionsmittels schwieriger ist als die Regenerierung einnes mit weniger stark adsorbierbaren Komponenten beladenen Adsorptionsmittels, ist für die erstgenannte Regenerieraufgabe auch ein höherer Energieaufwand nötig. Unter Berücksichtigung dieser Tatsache hat sich bei einem Verfahren mit zwei in getrennten Behältern angeordneten Adsorptionsbetten, die parallel vom Spülgas durchspült werden, als zweckmäßig erwiesen, das erste Adsorptionsbett mit 30 bis 80 %, vorzugsweise mit etwa 50 % des Spülgases zu beaufschlagen, um eine gleichmäßige Regenerierung beider Adsorptionsbetten zu erreichen.

In einer speziellen Verfahrensausgestaltung wird das Spülgas nacheinander durch beide Adsorptionsbetten geleitet, wobei das Spülgas erst nach Durchströmen des zweiten Adsorptionsbettes und vor dem Eintritt in das erste Adsorptionsbett aufgeheizt wird. Diese Verfahrensweise bietet sich an, wenn das Spülgas auch schon ohne Beheizung unter Bedingungen bereitsteht, die eine ausreichende Regenerierung des zweiten Adsorptionsbettes ermöglichen, was häufig der Fall ist. Sofern die Adsorptionsbetten in einem einzigen Behälter angeordnet sind, ist dabei lediglich ein Abzug des Spülgases zwischen den Adsorptionsbetten und eine Zuleitung des erhitzten Spülgases in das erste Adsorptionsbett vorzusehen, während die Anordnung in zwei getrennten Behältern keinerlei zusätzliche konstruktive Änderungen erfordert.

In einer vorteilhaften Ausbildung der Erfindung sind die beiden Adsorptionsbetten in einem gemeinsamen Behälter angeordnet und das Spülgas wird zeitlich nacheinander den Austrittsenden der beiden Adsorptionsbetten zugeführt. Dabei wird vorzugsweise zunächst das zweite Adsorptionsbett so lange mit heißem Spülgas beaufschlagt, bis dieses Adsorptionsbett ausreichend regeneriert, also von der weniger stark adsorbierbaren Komponente befreit ist, und dann wird das Spülgas direkt dem Austrittsende des ersten Adsorptionsbettes zugeführt, um die hohe Temperatur des Spülgases direkt in diese Zone einzuführen. Bei einer solchen Verfahrensweise hat sich als zweckmäßig erwiesen, das Spülgas während einer Dauer von 30 bis 70 %, vorzugsweise von etwa 50 % der Dauer der Heißspülphase dem Austrittsende des zweiten Adsorptionsbettes und während der restlichen Dauer der Heißspülphase dem Austrittsende des ersten Adsorptionsbettes zuzuführen. Während der ersten Teilphase, während der das Spülgas durch das zweite Adsorptionsbett geleitet wird, wird das mit der weiteren Komponente beladene Spülgas auch durch das erste Adsorptionsbett geleitet und von dessen Eintrittsende abgezogen. Hierdurch werden nicht nur zusätzliche konstruktive Maßnahmen zur Ableitung des Spülgases nach dem zweiten Adsorptionsbett vermieden, sondern es kann während dieser Phase auch schon eine begrenzte Desorption des Wasserdampfes beginnen.

Bei der Durchführung des erfindungsgemäßen Verfahrens werden jeweils zwei oder mehr Adsorber, die erfindungsgemäß mit je zwei hintereinander geschalteten Adsorptionsbetten ausgestattet sind, im zyklischen Wechsel eingesetzt, wobei jeweils mindestens ein Adsorber eine Adsorptionsphase durchläuft und einen von Wasserdampf und anderen adsorbierbaren Komponenten befreiten Produktstrom liefert, während mindestens ein anderer Adsorber regeneriert wird. Die Temperatur des für die Regenerierung benötigten Spülgases kann gegenüber üblichen Adsorptionsverfahren um etwa 50 bis 120 °C niedriger gewählt werden. Die Regeneriertemperatur hängt dabei im Einzelfall von der Art des verwendeten Adsorptionsmittels, der Zyklusdauer des Adsorptionsverfahrens und weiterer Verfahrensparameter ab. Bei der Verwendung von zeolitischem Molekularsieb, insbesondere von Zeolith 13X im ersten und zweiten Adsorptionsbett oder bei der Verwendung von Alugel im ersten Adsorptionsbett bzw. in der ersten Schicht des ersten Adsorptionsbettes lassen sich Spülgastemperaturen zwischen 60 und 120 °C, vorzugsweise zwischen 80 und 100 °C unter Erzielung guter Regenerierergebnisse einhalten. Die Regenerierung erfolgt dabei vorzugsweise nach dem sogenannten Thermopuls-Verfahren, bei dem die Heißspülphase relativ kurz ist und etwa zwischen 25 und 60 Minuten dauert. An die Heißspülphase schließt sich in üblicher Weise eine Kaltspülung an, während der der zuvor regenerierte Adsorber wieder auf die Adsorptionstemperatur zurückgekühlt wird.

Als weniger stark als Wasserdampf adsorbierbare Komponenten treten in vielen Fällen Kohlendioxid und/oder Kohlenwasserstoffe in Erscheinung.

Eine für die Durchführung des Verfahrens in einem einzigen Behälter geeignete Vorrichtung ist gekennzeichnet durch einen Behälter mit drei übereinander angeordneten Adsorptionsmittelschichten, wobei zwischen der zweiten und dritten Schicht ein Zwischenraum vorgesehen ist, mit einer vor der ersten Schicht angeordneten, mit einem Ventil versehenen Zuführungsleitung für Rohgas sowie einer mit einem Ventil versehenen Abzugsleitung für Spülgas und einer nach der dritten Schicht angeordneten, mit einem Ventil versehenen Abzugsleitung für Produktgas sowie einer Zuführungsleitung für Spülgas, und mit einer in den Zwischenraum zwischen der zweiten und dritten Schicht einmündenden, mit einem Ventil versehenen Zuführungsleitung für Spülgas.

0146082

Weitere Einzelheiten der Erfindung werden nachfolgend anhand der in den Figuren schematisch dargestellten Ausführungsbeispiele erläutert.

Es zeigen:

Figur 1   eine erste Ausführungsform der Erfindung mit zwei wechselseitig betriebenen Adsorbergruppen,

Figur 2   ein Detail einer zweiten Ausführungsform der Erfindung und

Figur 3   ein Detail einer dritten Ausführungsform der Erfindung.

-.-

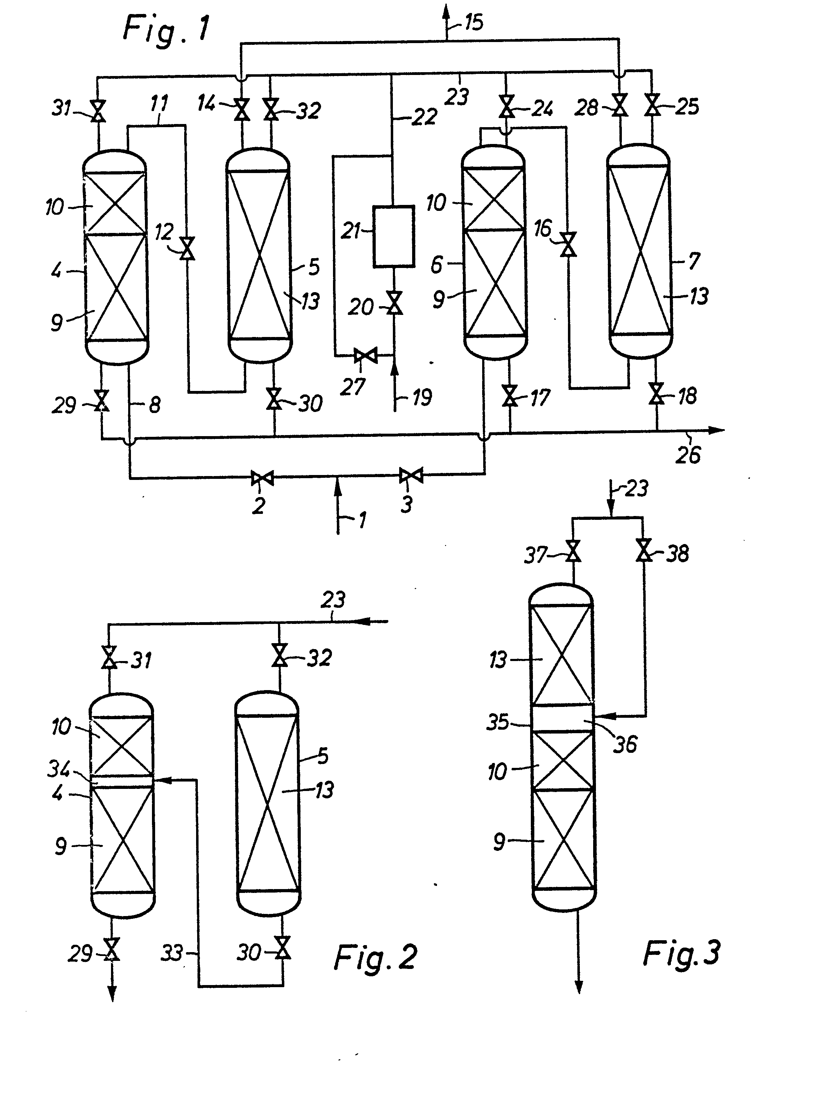

Bei dem in Figur 1 dargestellten Ausführungsbeispiel wird über Leitung 1 Rohgas, beispielsweise auf einen Druck von etwa 6 bar verdichtete Luft, zugeführt und abwechselnd bei geöffneten Ventilen 2 oder 3 einer ersten Adsorbereinheit, die aus den Behältern 4 und 5 besteht oder einer zweiten Adsorbereinheit, die aus den Behältern 6 und 7 besteht, zugeleitet. Bei geöffnetem Ventil 2 gelangt das Rohgas über Leitung 8 in den Behälter 4 und durchströmt darin zunächst eine erste Adsorptionsschicht 9, die aus Alugel besteht und die etwa 2/3 der Absorptionsmittelschüttung im Behälter 4 ausmacht. Beim Durchströmen der Schicht 9 wird der größte Teil des im Rohgas enthaltenen Wasserdampfs adsorbiert, so daß beim anschließenden Durchströmen der Adsorptionsmittelschüttung 10, die aus Zeolith 13X besteht, nur noch Restbestandteile Wasserdampf und schon ein Teil des Kohlendioxidsadsorbiert wird. Das vollständig von Wasser befreite Gas tritt über Leitung 11 aus und wird über das geöffnete Ventil 12 zum Eintrittsende des Adsorberbehälters 5 geleitet. Dieser Behälter enthält eine Adsorptionsmittelschüttung 13 aus Zeolith 13X oder einem anderen für die Adsorption von Kohlendioxid geeigneten Adsorptionsmittel. Das gereinigte Gas tritt über das geöffnete Ventil 14 aus dem Behälter 5 aus und wird über Leitung 15 als Produktgas abgezogen.

Während die hintereinander geschalteten Adsorberbehälter 4 und 5 eine Adsorptionsphase durchlaufen, werden die zuvor mit Wasserdampf bzw. Kohlendioxid beladenen Adsorberbehälter 6 und 7 regeneriert. Dazu wird zunächst bei geschlossenem Ventil 16 und geöffneten Ventilen 17 und 18 eine Entspannung der Adsorber 6 und 7 auf Atmosphärendruck vorgenommen und anschließend ein über Leitung 19 herangeführtes Spülgas, das bei geöffnetem Ventil 20 in der Heizeinrichtung 21 auf eine Temperatur

-.-

von etwa 100 °C aufgeheizt wird, über die Leitungen 22, 23 und die geöffneten Ventile 24, 25 parallel und im Gegenstrom zur Adsorptionsrichtung durch die Adsorberbehälter 6 und 7 geleitet. Dabei fällt ein mit desorbierten Komponenten beladenes Spülgas an, das über die geöffneten Ventile 17 und 18 abgezogen und über die Restgasleitung 26 abgeführt wird. Die Ventile 24 und 25 sind dabei so eingestellt, daß etwa 50 % des Regeneriergases über das Ventil 24 in den Behälter 6 eingeführt wird, um darin die Wasserdesorption zu vollziehen.

Nach Beendigung der Heißspülphase werden die Adsorberbehälter 6 und 7 noch während der Adsorptionsphase in den parallel betriebenen Adsorberbehältern 4 und 5 durch kaltes Spülgas wieder auf Adsorptionstemperatur zurückgekühlt. Hierzu wird das über Leitung 19 zugeführt Spülgas über das nunmehr geöffnete Ventil 27 bei geschlossenem Ventil 20 zur Leitung 22 und von dort über Leitung 23 und die geöffneten Ventile 24 und 25 durch die Behälter 6 und 7 geleitet und schließlich über Leitung 26 als Restgas abgezogen.

Für die Aufheizung des Spülgases während der Heißspülphase auf etwa 100 °C ist eine Energie aufzubringen, die beispielsweise schon durch Wärmetausch des Spülgases mit dem auf etwa 6 bar verdichteten Rohgas nach dessen Kompression durch die Verdichtungswärme gedeckt werden kann.

Nach Beendigung der Adsorptionsphase in den Behältern 4 und 5 bzw. der Desorptionsphase in den Behältern 6 und 7 werden die Ventile 2, 12, 14, 17, 18, 24 und 25 geschlossen und die dazu korrespondierenden Ventile 3, 16, 28, 29, 30, 31 und 32 geöffnet, wonach die beiden Adsorbergruppen in wechselseitig vertauschten Betriebszuständen betrieben werden.

Die Figur 2 betrifft eine Variante des in der Figur 1 dargestellten Verfahrens, wobei aus Gründen der Übersichtlichkeit nur eine Adsorbergruppe und die während der Regenerierung durchströmten Bauteile dargestellt sind. Die Abweichung von dem in Figur 1 dargestellten Verfahren besteht darin, daß bei der Regenerierung der Adsorber das aus dem nachgeschalteten Adsorber für die Kohlendioxidadsorption austretende mit Kohlendioxid beladene Spülgas über die Leitung 33 in das erste Adsorptionsbett zwischen die beiden Schichten 9 und 10 eingeleitet wird. Hierzu sind die beiden Schichten 9 und 10 nicht mehr unmittelbar übereinander angeordnet, sondern durch einen Zwischenraum 34 voneinander getrennt. Über das geöffnete Ventil 29 wird somit der gesamte desorbatbeladene Spülgasstrom abgezogen. Gegenüber der in Figur 1 dargestellten Ausführungsform bietet die Variante der Figur 2 den Vorteil, daß der Regeneriergasbedarf reduziert wird.

Bei der in Figur 3 dargestellten Ausführungsform der Erfindung sind die beiden Adsorptionsbetten mit den Adsorptionsmittelschüttungen 9, 10 und 13 in einem gemeinsamen Behälter 35 angeordnet. Zwischen den Schüttungen 10 und 13 befindet sich dabei ein Zwischenraum 36. Bei der Regenerierung einer solchen Anordnung wird zunächst bei geöffnetem Ventil 37 das über Leitung 23 herangeführte Regeneriergas im Gegenstrom zur Adsorptionsrichtung durch den Behälter 35 geleitet, bis das mit Kohlendioxid beladene Adsorptionsbett 13 ausreichend regeneriert ist. Hierzu wird eine Zeit von etwa 50 % der Heißspülphase benötigt. Danach wird Ventil 37 geschlossen und das heiße Spülgas über das dann geöffnete Ventil 38 in den Zwischenraum 35 geleitet, so daß es direkt über die wasserbeladenen Schichten 10 und 9 geführt wird.

Patentansprüche

1. Verfahren zur adsorptiven Abtrennung von Wasserdampf und mindestens einer weiteren, weniger stark adsorbierbaren Komponente aus einem Gasstrom, bei dem der Gasstrom während einer Adsorptionsphase dem Eintrittsende eines Adsorbers zugeführt und nach Durchströmen eines Adsorptionsbettes vom Austrittsende des Adsorbers der an Wasserdampf und der weiteren Komponente verarmte Gasstrom abgezogen wird, wobei nach Beendigung einer Adsorptionsphase während einer Heißspülphase ein über das Austrittsende des Adsorbers zugeführtes Spülgas bei erhöhter Temperatur durch den Adsorber geführt und mit desorbierten Komponenten beladenes Spülgas vom Eintrittsende des Adsorbers abgezogen wird, dadurch gekennzeichnet, daß der Gasstrom während einer Adsorptionsphase zwei hintereinander geschaltete Adsorptionsbetten durchströmt, wobei im ersten Adsorptionsbett im wesentlichen der gesamte Wasserdampf und im zweiten Adsorptionsbett im wesentlichen nur noch die weitere Komponente adsorbiert wird, und daß den Austrittsenden der beiden Adsorptionsbetten während mindestens eines Teils der Heißspülphase das Spülgas direkt zugeführt wird.

- 2 -

0146082

2. Verfahren nach Anspruch 1, dadurch gekennzeichnet, daß das erste Adsorptionsbett in zwei Schichten unterteilt ist, wobei im beladenen Zustand in der ersten, dem Eintrittsende des Adsorbers zugewandten Schicht im wesentlichen nur Wasserdampf adsorbiert ist und in der zweiten Schicht die Massenübergangszone für Wasserdampf und die Koadsorptionszone für die weitere Komponente liegt.

3. Verfahren nach Anspruch 1 oder 2, dadurch gekennzeichnet, daß die beiden Adsorptionsbetten in getrennten Behältern angeordnet sind, durch die das Spülgas parallel hindurchgeleitet wird.

4. Verfahren nach den Ansprüchen 2 und 3, dadurch gekennzeichnet, daß das aus dem zweiten Adsorptionsbett austretende, mit der weiteren Komponente beladene Spülgas dem Austrittsende der ersten Schicht des ersten Adsorptionsbettes zugeführt wird.

5. Verfahren nach Anspruch 3 oder 4, dadurch gekennzeichnet, daß dem ersten Adsorptionsbett 30 bis 80 %, vorzugsweise etwa 60 % des Spülgases und dem zweiten Adsorptionsbett das restliche Spülgas zugeleitet werden.

6. Verfahren nach Anspruch 1, dadurch gekennzeichnet, daß die beiden Adsorptionsbetten in einem gemeinsamen Adsorber angeordnet sind und daß das Spülgas zeitlich nacheinander den Austrittsenden der beiden Adsorptionsbetten zugeführt wird.

-.-

7. Verfahren nach Anspruch 6, dadurch gekennzeichnet, daß das Spülgas während einer Dauer von 20 bis 60 %, vorzugsweise von etwa 40 % der Dauer der Heißspülphase, dem Austrittsende des zweiten Adsorptionsbettes und während der restlichen Dauer der Heißspülphase dem Austrittsende des ersten Adsorptionsbettes zugeführt wird und daß das mit desorbierten Komponenten beladene Spülgas während beider Phasen vom Eintrittsende des ersten Adsorptionsbettes abgezogen wird.

8. Verfahren nach Anspruch 1, dadurch gekennzeichnet, daß die beiden Adsorptionsbetten nacheinander vom Spülgas durchströmt werden, wobei die Temperaturerhöhung des Spülgases nach dem Austritt aus dem zweiten Adsorptionsbett und vor dem Eintritt in das erste Adsorptionsbett erfolgt.

9. Verfahren nach einem der Ansprüche 1 bis 8, dadurch gekennzeichnet, daß das erste Adsorptionsbett ein zeolithisches Molekularsieb, vorzugsweise Zeolith 13X, als Adsorptionsmittel enthält.

10. Verfahren nach einem der Ansprüche 2 bis 9, dadurch gekennzeichnet, daß das erste Adsorptionsbett in der ersten Schicht Alugel und in der zweiten Schicht ein zeolithisches Molekularsieb, vorzugsweise Zeolith 13X, als Adsorptionsmittel enthält.

11. Verfahren nach einem der Ansprüche 1 bis 10, dadurch gekennzeichnet, daß die Temperatur des Spülgases zwischen 60 und 120 °C, vorzugsweise zwischen 80 und 100 °C, liegt.

0146082

12. Verfahren nach einem der Ansprüche 1 bis 11, dadurch gekennzeichnet, daß die Dauer der Heißspülphase zwischen 25 und 60 Minuten beträgt.

13. Vorrichtung zur Durchführung des Verfahrens nach einem der Ansprüche 1 bis 12, gekennzeichnet durch einen Behälter mit drei übereinander angeordneten Adsorptionsmittelschichten, wobei zwischen der zweiten und dritten Schicht ein Zwischenraum vorgesehen ist, mit einer vor der ersten Schicht angeordneten, mit einem Ventil versehenen Zuführungsleitung für Rohgas sowie einer mit einem Ventil versehenen Abzugsleitung für Spülgas und einer nach der dritten Schicht angeordneten, mit einem Ventil versehenen Abzugsleitung für Produktgas sowie einer Zuführungsleitung für Spülgas, und mit einer in den Zwischenraum zwischen der zweiten und dritten Schicht einmündenden, mit einem Ventil versehenen Zuführungsleitung für Spülgas.

0146082

Bl. 1/1

Fig. 1

Fig. 2

Fig. 3